# EUROPEAN PATENT SPECIFICATION

(11) **EP 2 135 700 B1**
(45) Date of publication and mention of the grant of the patent: **22.05.2013**
(21) Application number: 08011051.3
(22) Date of filing: 18.06.2008
(51) Int. Cl.: B23K 9/32, B08B 9/00, B08B 7/02, B08B 5/02

(54) **Method and apparatus for automated servicing of a welding torch head**
Verfahren und Vorrichtung zur automatischen Wartung eines Schweißbrennerkopfes
Procédé et appareil pour l'entretien automatisé d'une tête de chalumeau de soudage

(43) Date of publication of application: 23.12.2009
(73) Proprietor: Henkel AG & Co. KGaA, 40589 Düsseldorf (DE)
(72) Inventor: Keim, Karl-Heinrich, 89233 Ulm (DE); Schlumpp, Günter, 88477 Schwendi (DE); Kok Douwe M., 9679TC Scheemda (NL)
(74) Representative: Stromberg, Christian

(56) References cited:
- EP-A- 1 502 694
- EP-A- 1 911 541
- WO-A-97/03786
- WO-A-2004/039528
- WO-A-2007/050689
- JP-A- 61 086 083
- US-A- 4 778 976

## Description

The invention relates a method for automated servicing of a torch head according to the preamble part of claim 1.

The invention relates generally to the technical field of gas metal arc welding, e.g. of MIG/MAG welding (metal inert gas/metal active gas welding), and in particular to a method and an apparatus for automated servicing of a torch head of a welding torch used in this technical field.

Generally, welding torches for gas metal arc welding include at their distal end a torch head comprising at least one contact tip and a nozzle surrounding the at least one contact tip. A welding wire is fed through a central passageway of each contact tip and exits the torch head via an opening of the nozzle. Gas is supplied through the space between the at least one contact tip and the nozzle and exits through the nozzle opening. A high electrical voltage is applied to the contact tip and the welding wire. When the welding wire approaches a work piece to be welded, e.g. two parts of a work piece to be joined by welding, an electrical circuit is completed by an arc formed between the welding wire and the work piece. This arc carries an electrical current which causes the welding wire and a portion of the work piece to melt and the two pieces of the workpiece to be joined by welding. Thus, the welding wire is consumed during welding and has to be advanced through the passageway of the contact tip as the welding operation goes on.

Due to the very quick heating of the welding wire and the metal work piece to temperatures above their respective melting points, the melted welding wire or the melted portions of the work piece can spatter and adhere to the nozzle or the at least one contact tip of the torch head. The spatter material can have several detrimental effects on the quality of the welding, in particular on the quality of the weld seam. On the one hand, the spatter material can influence the electrical field of the arc between the contact tip and the metal work piece, and on the other hand, the spatter material can reduce the flow of gas through the nozzle. Therefore, it is necessary to service the torch head from time to time, in particular to clean the torch head from adhering spatter material. In former times, this service operation has been performed manually by servicing personnel.

Recently, WO-A-2005/092554 has proposed a method and an apparatus for automated servicing of a welding torch. The automated servicing disclosed in this document involves disassembling of the torch head, in particular removing the nozzle, and mechanically cleaning the components of the torch head, e.g. by milling. As a consequence, the known automated servicing operation is time-consuming due to the disassembling and re-assembling steps involved. Furthermore, the arc-forming characteristics of the torch head may be disadvantageously influenced by the mechanical cleaning as there is the risk of change of the shape of the torch head components.

WO-A-2004/039528 discloses a method according to the preamble part of claim 1. In particular, this document discloses a method for contact-freely removing foreign substances from a torch head, wherein the torch head is exposed to an electromagnetic field generated by a coil. At the same time nozzles apply a cleaning or wetting liquid to the welding torch head.

Documents EP-A-0951945, DE-A-10145168 and WO-A-02/49794 relate to the cleaning of a torch head, rather than to applying a treatment agent which shall remain on the surface of the torch head.

It is therefore an object of the present invention to enhance the automated servicing of a torch head of a welding torch to be less time-consuming and providing for a higher reproduceability of the arc characteristics even after a plurality of servicing operations.

For this purpose, according to one aspect of the invention, a method for automated servicing of a torch head according to claim 1, comprising at least one contact tip and a nozzle surrounding the at least one contact tip is provided, said method comprising the steps of contact-freely cleaning said torch head in an assembled state of said at least one contact tip and said nozzle, applying a torch head treatment agent to at least a portion of the surfaces of said at least one contact tip and said nozzle.

As according to the invention, the at least one contact tip and the nozzle of the welding torch head are cleaned in an assembled state the time-consuming disassembling and reassembling steps are avoided. Moreover, the welding torch head is contact-freely cleaned so that any detrimental change of the shape of the torch head components disadvantageously influencing the arc-forming characteristics thereof may be avoided.

For the contact-free cleaning step of the torch head at least one of a magnetic cleaning device, a compressed-air cleaning device and an ultrasonic cleaning device may be used. For example, the splatter material may be loosened by the compressed-air cleaning device and/or the ultrasonic cleaning device and be removed by the magnetic cleaning device. Alternatively the splatter material may be loosened and removed using only the magnetic cleaning device. The magnetic cleaning device may include at least one electromagnetic unit such that magnetic forces may only be generated during cleaning. Moreover, by varying the intensity of the electric current supplied to the at least one electromagnetic unit and/or to the ultrasonic cleaning device and/or by varying the intensity of the air jet expelled by the compressed-air cleaning device, the splatter material may be exposed to vibrations facilitating the loosening of the splatter material from the torch head components.

In order to avoid any deposition of torch head treatment agent onto the welding wire which may detrimentally influence the quality of the welding seam, the welding wire, which for welding is advanced through a passageway of the at least one contact tip, may be retracted into said passageway before said torch head treatment agent is applied.

For obtaining a substantially uniform deposition of the torch head treatment agent onto the torch head components, the torch head treatment agent is sprayed onto said at least one contact tip and said nozzle.

In order to prevent clogging of the gas inlet openings of the nozzle and/or the accumulation of torch head treatment agent around the nozzle opening, said torch head treatment agent is sprayed onto said at least one contact tip and said nozzle in a substantially horizontal direction.

In order to enhance the uniformity of the deposition of the torch head treatment agent on the torch head components, the torch head is rotated during the spraying operation.

In order to facilitate the spraying operation, a liquid dispersion which is atomized by compressed-air may be used as torch head treatment agent. Generally, the liquid dispersion may be a solvent-based dispersion or a water-based dispersion. As solvent-based torch head treatment agents might cause danger for the health of operating personnel, e.g. by inflammation or vaporisation, it is, however, preferred that said torch head treatment agent is a water-based dispersion. The torch head treatment agent may, for example, include between about 5 and about 50 percent-by-weight of boron nitride, preferably between about 15 and about 20 percent-by-weight of boron nitride. The size of the boron nitride particles may amount to between about 0.5 µm and about 10 µm, having an average size of about 4 µm.

In former times, the use of solvent-based torch head treatment agents was preferred as the temperature of the torch head usually amounts only to about 30 to 40°C which might not be high enough for quickly evaporating the water of a water-based torch head treatment agent. In order to nevertheless ensure a reliable formation of a torch head treatment agent layer on the torch head components, it is suggested that said spraying operation includes at least one first time interval during which torch head treatment agent is applied to the torch head and at least one second time interval during which the applied torch head treatment agent is dried, preferably by using compressed-air, e.g. heated compressed-air. The first time interval may amount to about one second, whereas the second time interval may amount to about 30 seconds. Moreover, it is possible to form the torch head treatment agent layer on the torch head components step by step, i.e. sublayer by sublayer. For this purpose, the spraying operation may include a plurality of cycles of alternating first and second time intervals, e.g. three to five cycles.

In order to ensure proper operation of the spraying device, the spraying nozzles may be cleaned from time to time, e.g. at least once a day, for example in the evening before the system is shut down. The cleaning of the spraying nozzles may, for example, be accomplished by switching from spraying of torch head treatment agent to spraying of water. Moreover, the torch head treatment agent may be agitated from time to time in order to prevent segregation of the dispersion and sedimentation of the boron nitride. This agitation may be accomplished, for example, by pumping the torch head treatment agent in a circulation line from and to a torch head treatment agent reservoir, e.g. every two hours for about five minutes.

In order to avoid pollution of the welding apparatus due to overspray of torch head treatment agent only the nozzle and the at least one contact tip of the torch head may be exposed to the torch head treatment agent spray during the spraying operation, while a shroud protects the rest of torch head against overspray.

If a robot device is used for moving the torch head, the afore-described cleaning operation may be implemented into the movement control of the robot device.

It may not be necessary to apply torch head treatment agent after every cleaning operation of the torch head. Rather, it is possible that between two consecutive operations of automated servicing including contact-free cleaning and applying torch head treatment agent, said torch head is at least once contact-freely cleaned.

According to a further aspect, the present invention provides for an apparatus for automated servicing of a torch head according to claim 11.

In the following, a preferred embodiment of the present invention will be explained in more detail, referring to the accompanying drawings, in which
- Fig. 1: is a schematic side elevation view of an apparatus for automated servicing of a torch head according to the invention,
- Fig. 2: is a sectional side view of a torch head treatment agent applying device,
- Fig. 3: is a graph for illustrating the time control of the operation of the spraying device, and
- Fig. 4: is a schematic side elevation view of a magnetic cleaning device.

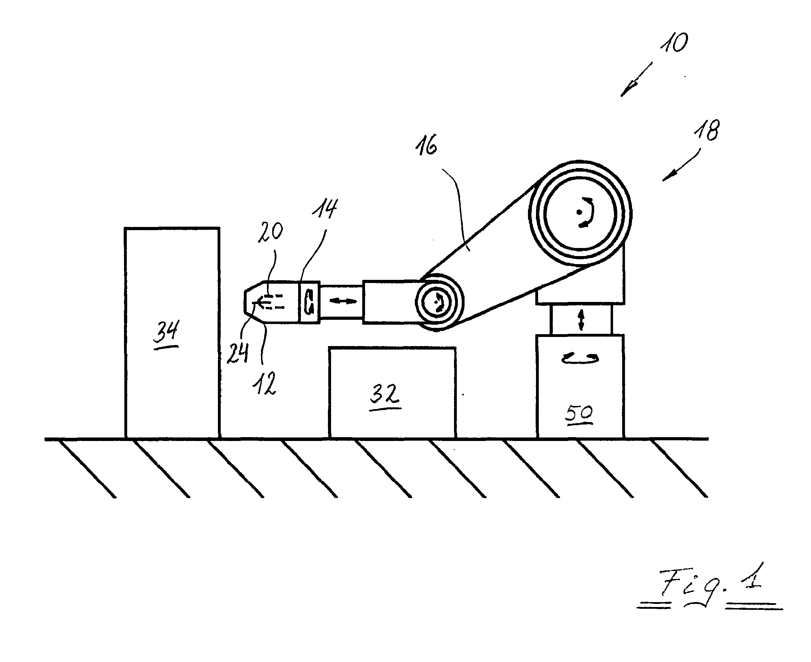

Figure 1 shows a schematical side elevational view of an apparatus 10 for automated servicing of a torch head 12 of a welding torch 14. The welding torch 14 is located at the free end of an arm 16 of a robot 18 having a plurality of degrees of freedom of movement indicated by respective arrows in figure 1. Thus, the welding torch 14 can be moved by the robot 18 from a welding position (not shown) to a plurality of servicing positions.

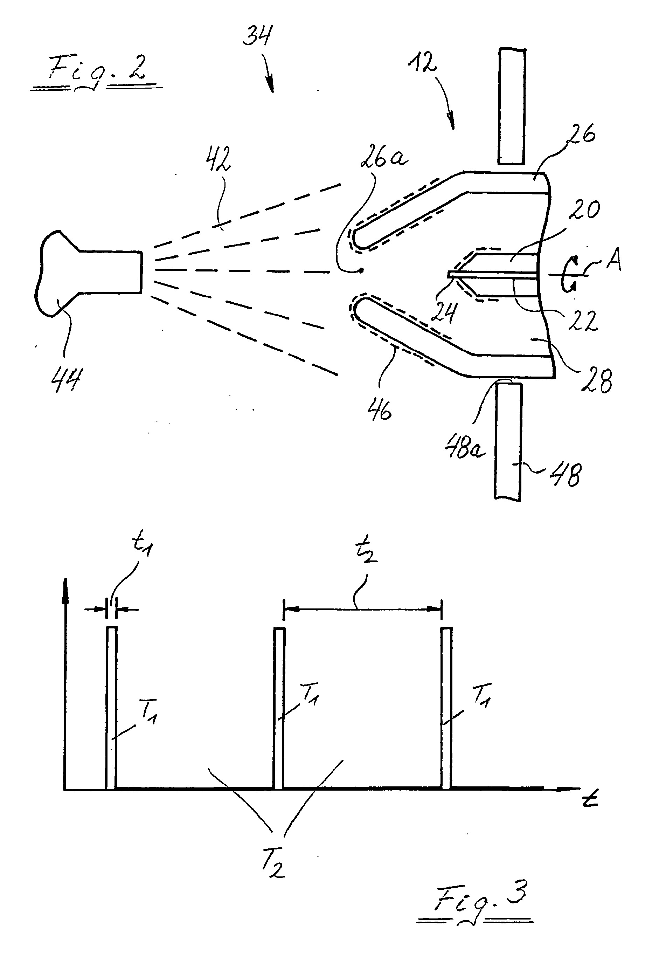

As is indicated in more detail in figure 2, the torch head 12 has a contact tip 20 in which a central passageway 22 is provided for advancing a welding wire 24 from a welding wire supply (not shown). The contact tip 20 is surrounded by a nozzle 26 having a nozzle opening 26a, and a gas (inert gas or active gas) may be supplied from a gas supply (not shown) through the annular space 28 formed between the contact tip 20 and the nozzle 26, and be discharged through the nozzle opening 26a. During the welding operation of the welding torch 14, the welding wire 24 may also exit through the nozzle opening 26a and contact a work piece to welded. By this contact, an electrical circuit is closed and an arc is ignited between the welding wire 24 and the work piece. Due to the high temperatures of this arc, the welding wire and a portion of the surface of the work piece are melted, and as the welding wire 24 is continuously advanced through the passageway 22 a weld seam may be formed on the work piece, for example for joining two parts of the work piece by the welding seem.

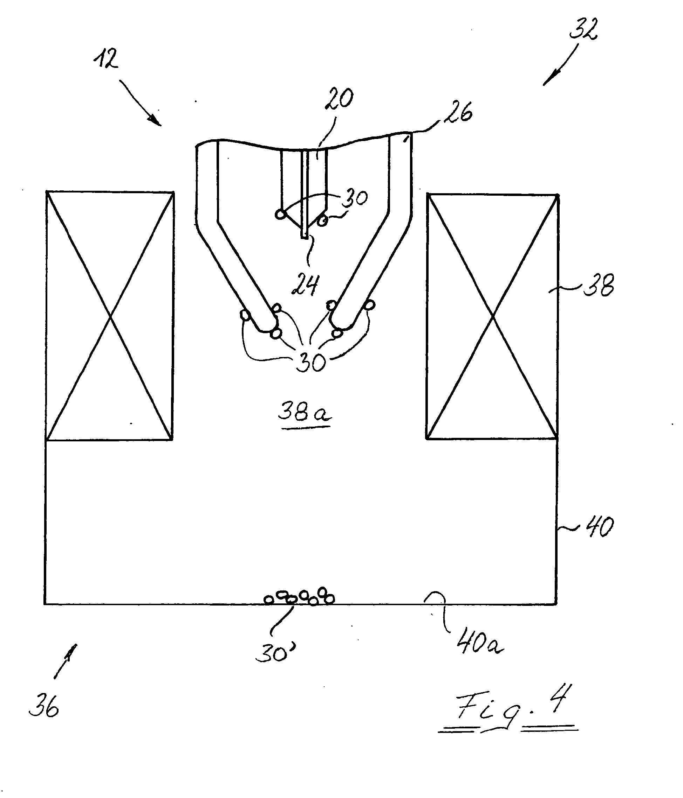

Due to the quick heating of the welding wire and the work piece to temperatures above the respective melting points, the melted material can spatter and adhere to the nozzle 26, in particular around the nozzle opening 26a thereof, and to the contact tip 20 of the torch head 12, as is shown in figure 4 in which the spatter material is indicated by 30. It is not necessary to emphasize that the spatter material 30 may have a negative effect on the quality of the weld seam, as it influences the electrical field of the arc formed between the contact tip 20 and the work piece. Therefore, it is important to clean the torch head 12 from time to time.

For this purpose, the apparatus 10 according to the invention has two servicing stations, namely a cleaning station 32 and a spraying station 34 (see figure 1).

As is shown in figure 4, the cleaning station 32 may for example include a magnetic cleaning device 36 comprising an electromagnetic coil 38 and a housing 40. The torch head 12 may be introduced by the robot 18 into the opening 38a of the electromagnetic coil 38, and an electric current may be supplied to the coil 38 generating a magnetic field which attracts the spatter material 30, loosens the spatter material 30 from the contact tip 20 and the nozzle 26 and causes the spatter material 30 to fall to the bottom 40a of the housing 40 where the removed spatter material is indicated by 30'.

It should be understood that the magnetic cleaning device 36 is only one possible embodiment of the cleaning station 32. For the same cleaning purpose, also other types of cleaning devices might be used as well, for example ultrasonic cleaning devices, compressed-air cleaning devices, or the like.

After the torch head 12 has been cleaned at the cleaning station 32, it is moved by the robot 18 to the spraying station 34 where a torch head treatment agent 42 is sprayed onto the contact tip 20 and the nozzle 26 in order to make it for the spatter material 30 more difficult to adhere at the contact tip 20 and the nozzle 26. According to a preferred embodiment of the invention, a water-based dispersion containing between about 15 and about 20 percent-by-weight of boron nitride is used as the torch head treatment agent 42, and is sprayed onto the torch head 12 by means of a two-component spraying nozzle 44, for example the two-component spraying nozzle known from DE-A 195 11 272, in which the liquid torch head treatment agent 42 is atomized by compressed-air.

The torch head treatment agent 42 forms a protecting film 46 on the nozzle 26 and the contact tip 20. In order to provide for a substantially uniform film 46, the torch head 12 is rotated around its axis A during the spraying operation, the axis A of the torch head 12 extending in the horizontal direction during the spraying operation. Spraying the torch head treatment agent 42 onto the torch head 12 with the nozzle opening 26a pointing in the upward direction may cause problems due to clogging of the gas supply openings (not shown) of the nozzle 26. Spraying the torch head treatment agent 42 onto the torch head 12 with the nozzle opening 26a pointing in the downward direction may cause problems due to the formation of droplets around the nozzle opening 26.

In order to avoid any pollution of the surrounding of the spraying station 34, a shroud 48 is provided having an opening 48a through which the torch head 12 is introduced for being sprayed with torch head treatment agent 42. The shroud 48 may form a housing around the spraying nozzle 44 and the torch head 12, which prevents overspray and may furthermore be used for collecting torch head treatment agent 42 sprayed onto the shroud 48.

In order to avoid any detrimental influence to the quality of the welding seam in a later welding operation, the welding wire 24 may be retracted into the passageway 22 during the spraying operation in order to prevent that also the welding wire 24 is covered with torch head treatment agent 42.

As the water-based torch head treatment agent 42 has a much lower vaporisation point than the formerly used solvent-based torch head treatment agents, and as the temperature of the torch head 14 is only in the range of about 30 to 40°C, there is a problem in that the torch head treatment agent 42 does not dry quick enough on the contact tip 20 and the nozzle 26, thus making it more difficult to obtain a uniform film 46 on the contact tip 20 and the nozzle 26, which is thick enough for effectively protecting the torch head 12 from adherence of spatter material 30. In order to nevertheless obtain a thick enough film 46, the following spraying process is suggested:

The torch head treatment agent 42 is applied to the torch head 12 in a plurality of cycles each of which includes a first time interval T1 and a second time interval T2, as is shown in the diagram of figure 3. During the first time interval T1, the duration of which is t1 and may amount to about 1 sec, the torch head treatment agent 42 is atomized and sprayed onto the torch head 12 by the spraying nozzle 44. During the following time interval T2, the duration of which is t2 and may amount, for example, to about 30 sec, the spray nozzle 44 only ejects compressed-air, e.g. heated compressed-air, in order to dry the film 46 formed on the torch head 12 during the first time interval T1. This cycle including a first spraying time interval T1 and a second drying time interval T2 may be repeated, for example three to five times, until the film 46 has grown to a sufficient thickness.

It should be noted that, although in the embodiment according to figure 1, the cleaning station 32 and the spraying station 34 are located at different servicing positions, they also may be combined in one single servicing station having only one servicing position. For this purpose, for example, the coil 38 of the magnetic cleaning device 36 may be used as a part of the shroud 48 of the spraying device, and an additional magnet may be provided around the two-component spraying nozzle 44 for attracting and collecting the spatter material 30' loosened from the contact tip 20 and the nozzle 26 by the magnetic forces generated by the electromagnetic coil 38.

As already mentioned in the afore-given discussion of the cleaning and spraying operation, the servicing of the torch head 14 may be accomplished by respective movements of the robot 18 under the control of the robot's control unit 50. In addition the control unit 50 may also be operatively connected to the first servicing station 32 and the second servicing station 34 in order to control, i.e. start and stop, their respective servicing operations.

Finally, it should be noted that many modifications and variations may be made to the afore-described specific embodiment without departing from the scope of the appended claims.

## Claims

1. A method for automated servicing of a torch head (12) comprising at least one contact tip (20) and a nozzle (26) surrounding the at least one contact tip (20), said method comprising the steps of:
- contact-freely cleaning said torch head (12) in an assembled state of said at least one contact tip (20) and said nozzle (26),
- applying a torch head treatment agent (42) to at least a portion of the surfaces of said at least one contact tip (20) and said nozzle (26);
wherein said torch head treatment agent (42) is sprayed onto said at least one contact tip (20) and said nozzle (26) in a substantially horizontal direction;
**characterized in that** said torch head (12) is rotated around its axis (A) during the spraying operation, the axis (A) of the torch head (12) extending in the horizontal direction during the spraying operation.

2. A method according to claim 1,
wherein at least one of a magnetic cleaning device (36), a compressed-air cleaning device and an ultrasonic cleaning device is used for contact-freely cleaning said torch head (12).

3. A method according to claim 1 or 2,
wherein a welding wire (24), which for welding is advanced through a passageway (22) of the at least one contact tip (20), is retracted into said passageway (22) before said torch head treatment agent (42) is applied.

4. A method according to any of claims 1 to 3,
wherein said torch head treatment agent (42) is a liquid dispersion which is atomized by compressed air.

5. A method according to claim 4,
wherein said torch head treatment agent (42) includes between about 5 and about 50 percent-by-weight of boron nitride, preferably between about 15 and about 20 percent-by-weight of boron nitride.

6. A method according to any of claims 1 to 5,
wherein said spraying operation includes at least one first time interval (T1) during which torch head treatment agent (42) is applied to the torch head (12), and at least one second time interval (T2) during which the applied torch head treatment agent (42) is dried, preferably by using compressed air.

7. A method according to claim 6,
wherein said spraying operation includes a plurality of cycles of first and second time intervals (T1, T2).

8. A method according to any of claims 1 to 7,
wherein only the nozzle (26) and the at least one contact tip (20) of the torch head (12) are exposed to the torch head treatment agent (42) spray during the spraying operation, while a shroud (48) protects the rest of the torch head (12) against overspray.

9. A method according to any of claims 1 to 8,
wherein a robot device (18) is used for moving the torch head (12).

10. A method according to any of claims 1 to 9,
wherein, between two consecutive operations of automated servicing including contact-free cleaning and applying torch head treatment agent (42), said torch head (12) is at least once contact-freely cleaned.

11. An apparatus (10) for automated servicing of a torch head (12) comprising at least one contact tip (20) and a nozzle (26) surrounding the at least one contact tip (20), preferably by using the method according to any of claims 1 to 10, said apparatus (10) comprising:
- a first servicing device (32) for contact-free cleaning the torch head (12) in an assembled state of said at least one contact tip (20) and said nozzle (26),
- a second servicing device (34) for applying a torch head treatment agent (42) to at least a portion of the surfaces of said at least one contact tip (20) and said nozzle (26) in a substantially horizontal direction, and
- a control unit (50) for starting operation of the first servicing device (32) and the second servicing device (34), respectively, after the torch head (12) has been transferred to a corresponding servicing position,
**characterized in that** the second servicing device (34) is provided with means suitable for applying the torch head treatment agent (42) to at least said portion of the surfaces of said at least one contact tip (20) and said nozzle (26) in the substantially horizontal direction, when said torch head (12) is rotated around its axis (A) which extends in the horizontal direction during the spraying operation.

## Patentansprüche

1. Verfahren zur automatisierten Wartung eines Schweißbrennerkopfes (12), der mindestens eine Kontaktspitze (20) und eine Düse (26), welche die mindestens eine Kontaktspitze (20) umgibt, umfasst, wobei das Verfahren folgende Schritte umfasst:
- kontaktloses Reinigen des Schweißbrennerkopfes (12) in einem zusammengebauten Zustand der mindestens einen Kontaktspitze (20) und der Düse (26),
- Anwenden eines Schweißbrennerkopfbehandlungsmittels (42) an mindestens einem Abschnitt der Oberflächen der mindestens einen Kontaktspitze (20) und der Düse (26);
wobei das Schweißbrennerkopfbehandlungsmittel (42) auf die mindestens eine Kontaktspitze (20) und die Düse (26) in einer im Wesentlichen horizontalen Richtung gesprüht werden;
**dadurch gekennzeichnet, dass** der Schweißbrennerkopf (12) während des Sprühvorgangs um seine Achse (A) gedreht wird, wobei sich die Achse (A) des Schweißbrennerkopfes (12) während des Sprühvorgangs in der horizontalen Richtung erstreckt.

2. Verfahren nach Anspruch 1, wobei eine magnetische Reinigungsvorrichtung (36) und/oder eine Druckluftreinigungsvorrichtung und/oder eine Ultraschallreinigungsvorrichtung für das kontaktlose Reinigen des Schweißbrennerkopfes (12) verwendet werden.

3. Verfahren nach Anspruch 1 oder 2, wobei ein Schweißdraht (24), der zum Schweißen durch einen Durchgang (22) der mindestens einen Kontaktspitze (20) hindurch vorangeschoben wird, in den Durchgang (22) hinein zurückgezogen wird, bevor das Schweißbrennerkopfbehandlungsmittel (42) aufgetragen wird.

4. Verfahren nach einem der Ansprüche 1 bis 3, wobei das Schweißbrennerkopfbehandlungsmittel (42) eine flüssige Dispersion ist, die durch Druckluft zerstäubt wird.

5. Verfahren nach Anspruch 4, wobei das Schweißbrennerkopfbehandlungsmittel (42) zwischen etwa 5 und etwa 50 Gewichtsprozent Bornitrid, bevorzugt zwischen etwa 15 und etwa 20 Gewichtsprozent Bornitrid, enthält.

6. Verfahren nach einem der Ansprüche 1 bis 5, wobei der Sprühvorgang mindestens ein erstes Zeitintervall (T1) umfasst, während dem das Schweißbrennerkopfbehandlungsmittel (42) auf den Schweißbrennerkopf (12) aufgetragen wird, und mindestens ein zweites Zeitintervall (T2) umfasst, während dem das aufgetragene Schweißbrennerkopfbehandlungsmittel (42), bevorzugt unter Verwendung von Druckluft, getrocknet wird.

7. Verfahren nach Anspruch 6, wobei der Sprühvorgang mehrere Zyklen erster und zweiter Zeitintervalle (T1, T2) umfasst.

8. Verfahren nach einem der Ansprüche 1 bis 7, wobei nur die Düse (26) und die mindestens eine Kontaktspitze (20) des Schweißbrennerkopfes (12) während des Sprühvorgangs mit dem Schweißbrennerkopfbehandlungsmittel (42)-Spray in Kontakt gebracht werden, während eine Abschirmung (48) den übrigen Teil des Schweißbrennerkopfes (12) vor Übersprühen schützt.

9. Verfahren nach einem der Ansprüche 1 bis 8, wobei eine Robotervorrichtung (18) zum Bewegen des Schweißbrennerkopfes (12) verwendet wird.

10. Verfahren nach einem der Ansprüche 1 bis 9, wobei der Schweißbrennerkopf (12) zwischen zwei aufeinanderfolgenden Durchgängen der automatisierten Wartung mit kontaktfreier Reinigung und Auftragen von Schweißbrennerkopfbehandlungsmittel (42) mindestens einmal kontaktlos gereinigt wird.

11. Vorrichtung (10) für eine automatisierte Wartung eines Schweißbrennerkopfes (12), der mindestens eine Kontaktspitze (20) und eine Düse (26), welche die mindestens eine Kontaktspitze (20) umgibt, umfasst, bevorzugt unter Verwendung des Verfahrens nach einem der Ansprüche 1 bis 10, wobei die Vorrichtung (10) Folgendes umfasst:
- eine erste Wartungsvorrichtung (32) zum kontaktfreien Reinigen des Schweißbrennerkopfes (12) in einem zusammengebauten Zustand der mindestens einen Kontaktspitze (20) und der Düse (26),
- eine zweite Wartungsvorrichtung (34) zum Auftragen eines Schweißbrennerkopfbehandlungsmittels (42) auf mindestens einen Abschnitt der Oberflächen der mindestens einen Kontaktspitze (20) und der Düse (26) in einer im Wesentlichen horizontalen Richtung, und
- eine Steuereinheit (50) zum Starten des Betriebes der ersten Wartungsvorrichtung (32) bzw. der zweiten Wartungsvorrichtung (34), nachdem der Schweißbrennerkopf (12) in eine entsprechende Wartungsposition gebracht wurde,
**dadurch gekennzeichnet, dass** die zweite Wartungsvorrichtung (34) mit Mitteln ausgestattet ist, die dafür geeignet sind, das Schweißbrennerkopfbehandlungsmittel (42) auf mindestens den Abschnitt der Oberflächen der mindestens einen Kontaktspitze (20) und der Düse (26) in der im Wesentlichen horizontalen Richtung aufzutragen, wenn der Schweißbrennerkopf (12) um seine Achse (A) gedreht wird, die sich während des Sprühvorgangs in der horizontalen Richtung erstreckt.

## Revendications

1. Procédé d'entretien automatique d'une pointe de chalumeau (12) comprenant au moins un embout de contact (20) et une buse (26) entourant l'au moins un embout de contact (20), ledit procédé comprenant les étapes de :
- nettoyer sans contact ladite pointe de chalumeau (12) dans un état assemblé dudit au moins un embout de contact (20) et de ladite buse (26),
- appliquer un agent de traitement de pointe de chalumeau (42) sur au moins une partie des surfaces dudit au moins un embout de contact (20) et de ladite buse (26) ;
dans lequel ledit agent de traitement de pointe de chalumeau (42) est pulvérisé sur ledit au moins un embout de contact (20) et ladite buse (26) dans une direction essentiellement horizontale ;
**caractérisé en ce que** ladite pointe de chalumeau (12) est tournée autour de son axe (A) pendant l'opération de pulvérisation, l'axe (A) de la pointe de chalumeau (12) s'étendant dans la direction horizontale pendant l'opération de pulvérisation.

2. Procédé selon la revendication 1,
dans lequel au moins l'un parmi un dispositif de nettoyage magnétique (36), un dispositif de nettoyage à air comprimé et un dispositif de nettoyage à ultrasons est utilisé pour le nettoyage sans contact de ladite pointe de chalumeau (12).

3. Procédé selon la revendication 1 ou 2,
dans lequel un fil de soudure (24), qui est avancé pour le soudage à travers un passage (22) de l'au moins un embout de contact (20), est rétracté dans ledit passage (22) avant que ledit agent de traitement de pointe de chalumeau (42) soit appliqué.

4. Procédé selon l'une quelconque des revendications 1 à 3,
dans lequel ledit agent de traitement de pointe de chalumeau (42) est une dispersion liquide qui est atomisée par de l'air comprimé.

5. Procédé selon la revendication 4,
dans lequel ledit agent de traitement de pointe de chalumeau (42) comprend entre environ 5 et environ 50 pour cent en poids de nitrure de bore, de préférence entre environ 15 et environ 20 pour cent en poids de nitrure de bore.

6. Procédé selon l'une quelconque des revendications 1 à 5,
dans lequel ladite opération de pulvérisation comprend au moins un premier intervalle de temps (T1) pendant lequel l'agent de traitement de pointe de chalumeau (42) est appliqué sur la pointe de chalumeau (12), et au moins un deuxième intervalle de temps (T2) pendant lequel l'agent de traitement de pointe de chalumeau (42) appliqué est séché, de préférence en utilisant de l'air comprimé.

7. Procédé selon la revendication 6,
dans lequel ladite opération de pulvérisation comprend une pluralité de cycles de premiers et deuxièmes intervalles de temps (T1, T2).

8. Procédé selon l'une quelconque des revendications 1 à 7,
dans lequel seule la buse (26) et l'au moins un embout de contact (20) de la pointe de chalumeau (12) sont exposés à la pulvérisation de l'agent de traitement de pointe de chalumeau (42) pendant l'opération de pulvérisation, tandis qu'une enveloppe (48) protège le reste de la pointe de chalumeau (12) contre une surpulvérisation.

9. Procédé selon l'une quelconque des revendications 1 à 8,
dans lequel un dispositif robot (18) est utilisé pour déplacer la pointe de chalumeau (12).

10. Procédé selon l'une quelconque des revendications 1 à 9,
dans lequel, entre deux opérations consécutives d'entretien automatique comprenant le nettoyage sans contact et l'application de l'agent de traitement de pointe de chalumeau (42), ladite pointe de chalumeau (12) est nettoyée sans contact au moins une fois.

11. Appareil (10) pour l'entretien automatique d'une pointe de chalumeau (12) comprenant au moins un embout de contact (20) et une buse (26) entourant l'au moins un embout de contact (20), de préférence en utilisant le procédé selon l'une quelconque des revendications 1 à 10, ledit appareil (10) comprenant :
- un premier dispositif d'entretien (32) pour le nettoyage sans contact de la pointe de chalumeau (12) dans un état assemblé dudit au moins un embout de contact (20) et de ladite buse (26),
- un deuxième dispositif d'entretien (34) pour appliquer un agent de traitement de pointe de chalumeau (42) sur au moins une partie des surfaces de l'au moins un embout de contact (20) et de ladite buse (26) dans une direction essentiellement horizontale, et
- une unité de commande (50) pour démarrer le fonctionnement du premier dispositif d'entretien (32) et du deuxième dispositif d'entretien (34), respectivement, après que la pointe de chalumeau (12) a été transférée dans une position d'entretien correspondante,
**caractérisé en ce que** le deuxième dispositif d'entretien (34) est doté de moyens appropriés pour appliquer l'agent de traitement de pointe de chalumeau (42) sur au moins ladite partie des surfaces dudit au moins un embout de contact (20) et de ladite buse (26) dans la direction essentiellement horizontale, lorsque ladite pointe de chalumeau (12) est tournée autour de son axe (A) qui s'étend dans la direction pendant l'opération de pulvérisation.
